# EUROPEAN PATENT APPLICATION

(11) **EP 2 508 716 A2**
(43) Date of publication of application: **10.10.2012**
(21) Application number: 12159283.6
(22) Date of filing: 13.03.2012
(51) Int. Cl.: F01D 25/30, F02K 1/78

(54) **Improvements in or relating to gas turbine engine transition ducts**

(30) Priority: 08.04.2011 GB 201105930
(71) Applicant: Rolls-Royce plc, London SW1E 6AT (GB)
(72) Inventor: Cooper, Barnsdale Joseph, Oxfordshire OX18 3PN (GB); Hayton, Paul Robert, Olveston, Bristol BS35 4BT (GB)
(74) Representative: Tindall, Adam

(57) **Abstract**

A gas turbine engine transition duct 34 is used to convey exhaust gas and bypass air away from the engine, towards an exhaust nozzle (not shown). The duct 34 defines the outer extremity of the path for gas and/or air through the duct. The duct comprises a plurality of flat panel members 36 which together define the outer extremity of the path.

## Description

### FIELD OF THE INVENTION

Embodiments of the present invention relate to transition ducts for use in gas turbine engines.

### BACKGROUND TO THE INVENTION

In aerospace applications, a transition duct may be used with a gas turbine engine to convey exhaust gas and bypass air away from the engine turbines, toward an exhaust nozzle. The transition duct may be required to direct the gas and air toward intermediate arrangements such as a reheater or afterburner arrangement, prior to reaching the exhaust nozzle. The transition duct may be required to provide a transition between the exit of the turbines, which is typically circular, and an exhaust nozzle of a different shape, such as a rectangular exhaust nozzle. The shape of the exhaust nozzle may be dictated by other requirements, such as other constraints on the shape or size of the airframe.

### BRIEF DESCRIPTION OF VARIOUS EMBODIMENTS OF THE INVENTION

Examples of the present invention provide a gas turbine engine transition duct through which, in use, exhaust gas and bypass air are conveyed away from the engine toward an exhaust nozzle, the duct defining the outer extremity of the path for gas and/or air through the duct, and the duct comprising a plurality of flat panel members which together define the outer extremity of the path.

This provides the advantage that the overall shape of the casing is and its constituent parts are both simple, to aid manufacture. Complex shapes are not required, which is expected to reduce the cost and time associated with manufacture of the transition duct.

The duct may comprise a plurality of primary flat panel members which have respective downstream edges defining a substantially polygonal duct outlet. The duct may comprise four primary flat panel members which have respective downstream edges defining a substantially rectilinear duct outlet.

The duct may comprise a plurality of primary flat panel members which together define a substantially polygonal cross-section, perpendicular to the flow direction, during use. There may be four primary flat panel members which together define a substantially rectilinear cross-section, perpendicular to the flow direction, during use.

The primary flat panel members may extend downstream from a non-polygonal duct inlet, which is narrower than the cross-section defined by the primary members, along at least one axis. There may be guide panels located around the inlet, each guide panel being a flat panel member and the guide panels being oriented to widen the bypass air path, along the path, the guide panels widening the path from the inlet toward the outer extremity defined by the primary flat panel members. The guide panels may be oriented to be oblique to the primary flat panel members.

The duct may further comprise guide vanes positioned around the duct inlet to direct incoming bypass air outwardly toward the primary panel members. The guide vanes may be positioned to direct bypass air across the guide panels. The guide vanes may be each shaped to fellow at least part of the outline of the duct inlet, at a substantially constant separation when viewed along the duct.

The duct may house a liner defining an inner path for exhaust gases within an outer path for bypass air.

### BRIEF DESCRIPTION OF THE DRAWINGS

Examples of the present invention will now be described in more detail, by way of example only, and with reference to the accompanying drawings, in which:
Fig. 1 is a partial section of the central axis of a gas turbine engine, schematically indicating an example of the present invention;
Figs. 2 and 3 are schematic perspective views of a transition duct;
Fig. 4 is a schematic longitudinal section along the duct of Figs. 2 and 3;
Fig. 5 is a view through the outlet of the transition duct of Figs. 2 to 4;
Fig. 6 illustrates the various panels used to form the duct of Figs. 2 to 5 prior to assembly;
Fig. 7 is a perspective view of an alternative example;
Fig. 8 is a perspective view through the outlet of the duct of Fig. 7; and
Fig. 9 illustrates part of the structure of the duct of Figs. 7 and 8, at the inlet of the duct

### DETAILED DESCRIPTION OF VARIOUS EMBODIMENTS OF THE INVENTION

The figures illustrate a gas turbine engine transition duct 34 through which, in use, exhaust gas and bypass air are conveyed away from the engine 10 toward an exhaust nozzle 19. The duct 34 defines the outer extremity of the path 35 for gas and/or air through the duct 34. The duct 34 comprises a plurality of flat panel members 36 which together define the outer extremity of the path 35.

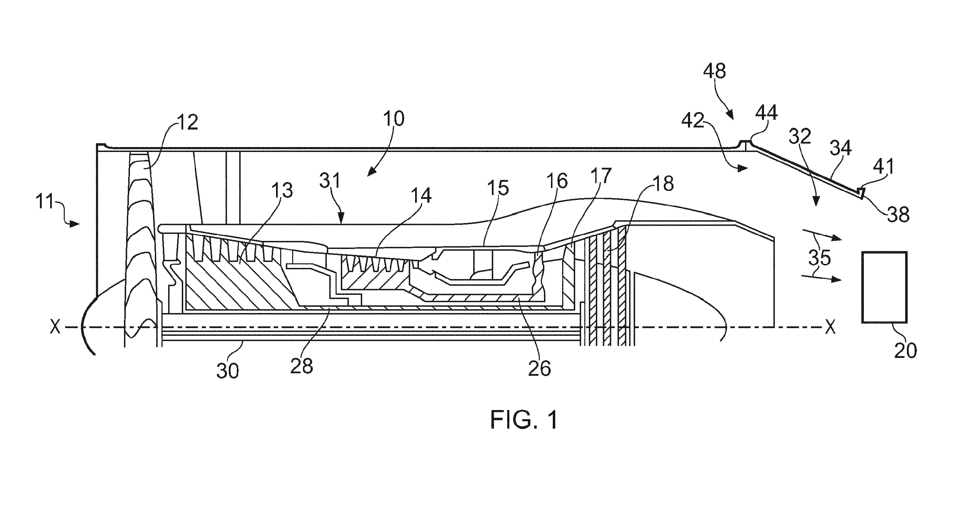

Referring to Fig. 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produces two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18. The high, intermediate and low pressure turbines 16, 17 and 18 respectively drive the high and intermediate pressure compressors 14 and 13 and the fan 12 by suitable interconnecting shafts 26, 28, 30.

Exhaust combustion gases which leave the turbine 18, and bypass air passing around the engine core 31 are directed through a transition region 32 by a transition duct 34 before being exhausted through the nozzle 19 to provide propulsive thrust. A liner (not shown in Fig. 1) may be provided within part of the transition to duct 34, to prevent mixing of the bypass air and the exhaust gases. A reheater or afterburner 20 may be provided before the exhaust nozzle 19, indicated schematically in Fig. 1.

### Transition duct

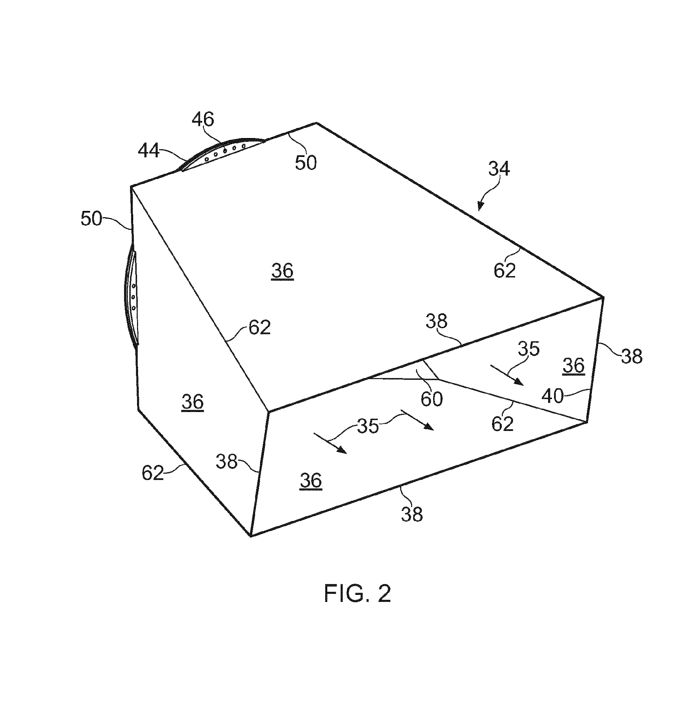

An example transition duct 34 is illustrated in more detail in Fig. 2. The transition duct 34, in use, conveys exhaust gas and bypass air away from the engine, as noted above, toward an exhaust nozzle 19. In order to do this, the duct 34 defines the outer extremity of the path for gas and/or air through the duct 34. The path is schematically indicated in Fig. 2 by arrows 35. The duct 34 comprises a plurality of flat panel members 36 which together define the outer extremity of the path 35.

Each of the flat panel members 36 is in the form of a flat sheet or flat plate. That is, each flat panel member is a planar member.

In this example, the duct comprises four primary flat panel members 36 which each has a downstream edge 38. The edges 38 define between them a rectangular outlet 40 for the duct 34. In other examples, other outlet shapes could be provided. Other shapes could include other rectilinear shapes, such as a square outlet 40. If a different number of primary flat panel members are used, other polygonal duct outlet shapes can be provided, such as triangles, hexagons etc. The flat, planar nature of the panel members 36 results in each edge 38 being straight and hence, the outlet 40 will have a rectilinear or polygonal shape, according to the number of panel members 36 which are used.

The flat, planar nature of the panel members 36 also results in the duct 34 having a substantially polygonal cross-section, perpendicular to the flow direction 35. The cross-section will generally have the same shape as the outlet 40, but may be larger or smaller in size, according to the angle at which the panel members 36 are set relative to each other, i.e. whether they are rectilinear or flare toward or away from the outlet 40.

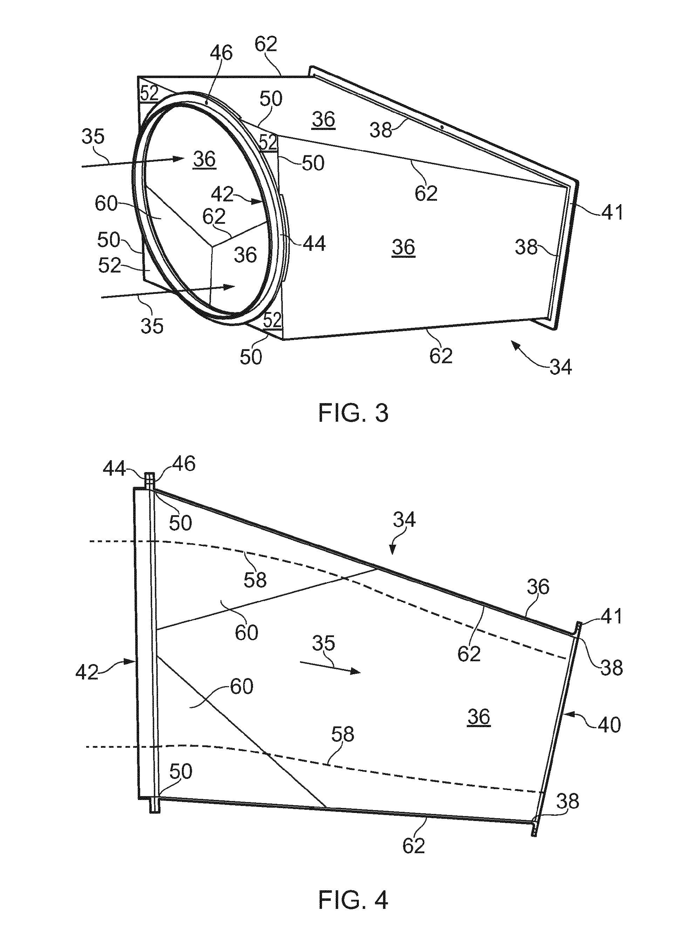

The outlet 40 carries a flange 41, best seen in Fig. 3 and omitted from some of the drawings in the interests of clarity. The flange 41 allows for mounting the duct outlet 40 to the exhaust nozzle 19 or to other arrangements such as the afterburner 20.

The duct 34 has an inlet 42, generally opposite to the outlet 40. The inlet 42 can be seen clearly in Fig. 3. The inlet 42 is defined by a flange ring 44 containing bolt holes 46 by which the duct 34 can be mounted to the engine 10 as indicated, for example, at 48 in Fig. 1. The exit from the turbines is typically circular in form, hence the use of a circular flange ring 44. The flange ring 44 is secured to the upstream edges 50 of the panel members 36, so that the flange ring 44 projects slightly beyond the panel members 36 for fixing the duct 34 in position, as just described. Gaps between the flange ring 44 and the upstream edges 50 of the panel members 36, particularly in the corners of the inlet 42, are filled by small filler plates 52, made of flat, sheet material.

Other shapes of turbine exit can be accommodated and it will be readily understood how the flange ring 44 could be replaced with an alternative arrangement to secure the duct 34 to a turbine exit of various rectilinear, polygonal and non-polygonal shapes, and of various sizes.

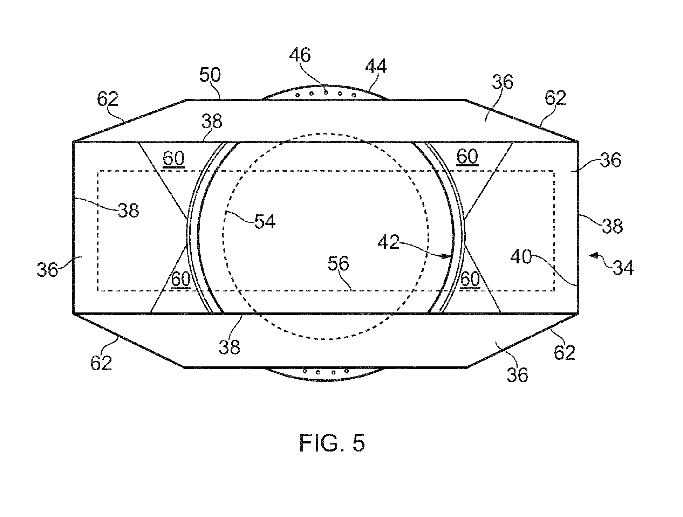

It can be seen from the drawings, particularly Fig. 5, that the flange ring 44 is narrower than the cross-section defined by the panel members 36. This applies along at least one axis (in this example, along the axis which is illustrated as the horizontal axis in Fig. 5).

The duct 34 therefore forms a box with flat (planar) sides serving to convey gas and/or air from the inlet 42 to the outlet 40 and in so doing, to provide a transition between the circular inlet 42 to the shape of the outlet 40, which is angular in this example. A liner may be provided within the duct 34 to keep exhaust combustion gases separate from bypass air white flowing through the duct 34. Figure 5 indicates the position of the liner edge at the inlet 42 by a broken circle 54, and at the outlet 40 by a broken rectangle 56. Broken lines 58 indicate the liner position in Fig. 4. We envisage that a liner will usually be employed, so that there will be an inner path for exhaust gases, within an outer path for bypass air. The bypass air will provide cooling for the liner. Thus, in this example, the duct 34 defines the outer extremity of the path of bypass air passing through the duct 34. The remaining discussion will assume that the fluid flowing past the surfaces provided by the duct 34 will be bypass air, but it is to be understood that in other examples, the fluid may be exhaust combustion gases or a mixture of bypass air and exhaust combustion gases.

In the absence of the features now to be described, bypass air entering the inlet 42 would encounter a sudden or step change in the cross-section of the flow path 35, from the circular cross section of the inlet 42, to the rectangular cross section of the duct 34. This would be likely to result in a disturbed flow pattern and in particular, is likely to result in flow separation. Smooth flow downstream of the inlet 42 is encouraged in this example by the provision of guide panels 60 located around the inlet 42. Each guide panel 60 is a flat panel member in the form of a flat sheet or flat plate. That is, each guide panel 60 is a planar member. The guide panels 60 are oriented to widen the bypass air path 35, along the path 35, the guide panels 60 widening the path 35 from the inlet 42 toward the outer extremity defined by the primary flat panel members 36. The guide panels 60 are generally triangular in shape and are oriented to be oblique to the primary flat panel members 36. That is, the guide panels 60 are not parallel with any of the primary flat panel members 36.

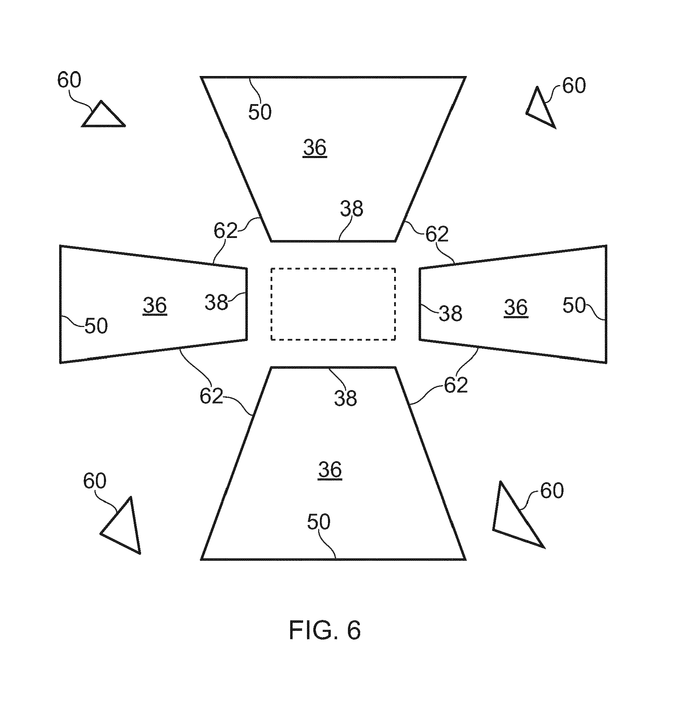

The relative positions and orientations of the inlet 42 and the outlet 40, the sizes of the inlet 42 and the outlet 40, and consequently the degree of taper taking place within the duct 34 can all be modified by changing the shape of the primary flat panel members 36, as can be understood by considering Fig. 6. Fig. 6 shows the duct 34 of the first example, prior to assembly. Each of the primary panel members 36 has downstream edges 38, as discussed above, which can be brought together to form the outlet 40, indicated in broken lines in Fig. 6. Front-to-back edges 62 of the panel members 36 lead from the downstream edges 38 to the upstream edges 50 at the inlet 42 in the assembled duct 34. The edges 62 of neighbouring panel members 36 are fixed together during formation of the duct 34 by means of welding, bolted flanges, mechanical joints, pins or other appropriate fixing techniques. If the shape of the panel members 36 is changed by changing the angles between the various edges 38, 50, 62 the resultant assembled duct 34 can be modified in shape, as noted above. In particular, the taper angles can be changed, and the degree of redirection provided by the transition duct 34 can be changed.

We expect that flow separation will occur if the outer perimeter of the duct 34 widens at a flare angle greater than about 15 degrees. Consequently, the flare provided by the primary flat panel members 36, and the reduced flares provided by the guide panels 60 will desirably maintain flare angles below 15 degrees as bypass air flows along the extremities of duct 34.

The guide panels 60 may be simple triangular shapes, as illustrated in Fig. 6, and it can readily be understood from Fig. 6 that the shape and size of the panels 60 allows modification of the effect of the guide panels 60 in smoothing the flow of bypass air immediately downstream of the inlet 42.

### Guide vanes

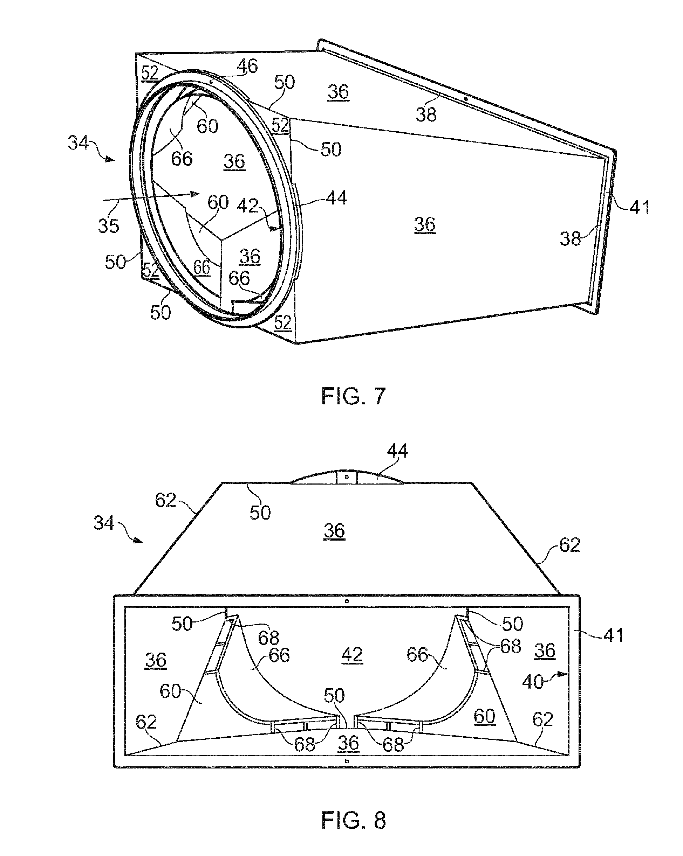

Figs. 7, 8 and 9 illustrate a modified version of the duct 34, described above. Many features of the duct illustrated in Figs. 7, 8 and 9 are the same as, or correspond closely with the corresponding features in the earlier drawings and are therefore given the same reference numerals. The principal differences relate to the provision of guide vanes 66, as follows.

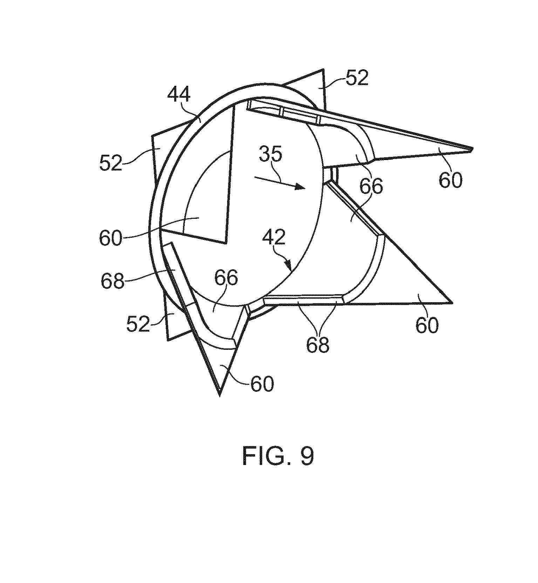

It has been noted above that it is desirable to maintain smooth flow of bypass air entering the inlet 42 and in particular, to use guide panels 60 in order to encourage the smooth flow. Smooth flow can be further encouraged by the provision of guide vanes 66. These are positioned around the inlet 42, as can be seen in Fig. 7. The guide vanes 66 are in the form of curved sheets which are shaped, primarily by an appropriate choice of curvature, to fellow at least part of the outline of the inlet 42. Thus, the guide vanes 66 can be seen in Figure 7 following the circular shape of the inlet 42. However, the guide vanes 66 flare outwardly (as viewed along the duct 34, through the inlet 42, and as can be seen in Fig. 8 and Fig. 9) so that they will capture some bypass air from the edges of the bypass air flow, and encourage this air to turn outwardly to flow across the guide panels 60, thereby encouraging smooth flow across the guide panels 60 and thereafter across the flat panel members 36, discouraging flow separation. It is envisaged that the use of guide vanes 66 will sallow greater flare angles to be used for the guide panels 60, without flow separation occurring.

Fig. 9 illustrates the guide vanes 66 mounted in position by pillars 68 of small cross-section. The use of a small cross-section for the pillars 68 allows the functions of the guide panels 60 to be achieved with minimal interference from the mounting arrangements of the guide vanes 66. That is, the cross-section of the pillars 68 may be sufficiently small as to create minimal interference with the effect of the guide panels 60 in turning some bypass air flow across the guide panels 60 and the flat panel members 36, as described above.

Although embodiments of the present invention have been described in the preceding paragraphs with reference to various examples, it should be appreciated that modifications to the examples can be made without departing from the scope of the invention as claimed. For example, many different shapes, sizes and relative shapes and sizes can be chosen for the various components, particularly in response to external constraints imposed by engine design or airframe design. The skilled reader will have knowledge of appropriate materials, such as metals or alloys for use in constructing structures described.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments, whether described or not.

## Claims

1. A gas turbine engine transition duct through which, in use, exhaust gas and bypass air are conveyed away from the engine toward an exhaust nozzle, the duct defining the outer extremity of the path for gas and/or air through the duct, and the duct comprising a plurality of flat panel members which together define the outer extremity of the path, wherein
a plurality of primary flat panel members extend downstream from a duct inlet which is narrower than the cross-section defined by the primary panel members, along at least one axis; and
guide panels located around the inlet, each guide panel being a flat panel member and the guide panels being oriented to widen the path from the inlet toward the outer extremity defined by the primary flat panel members.

2. A duct according to claim 1, wherein the plurality of primary flat panel members have respective downstream edges defining a substantially polygonal duct outlet.

3. A duct according to claim 2, comprising four primary flat panel members which have respective downstream edges defining a substantially rectilinear duct outlet.

4. A duct according to any one of the preceding claims wherein the plurality of primary flat panel members together define a substantially polygonal cross-section, perpendicular to the flow direction, during use.

5. A duct according to claim 4, comprising four primary flat panel members which together define a substantially rectilinear cross-section, perpendicular to the flow direction, during use.

6. A duct according to any one of the preceding claims, wherein the guide panels are oriented to be oblique to the primary flat panel members.

7. A duct according to any one of the preceding claims, further comprising guide vanes positioned around the duct inlet to direct incoming bypass air outwardly toward the primary panel members.

8. A duct according to claim 7, wherein the guide vanes are positioned to direct bypass air across the guide panels.

9. A duct according to claim 7 or 8, wherein the guide vanes are shaped to fellow at least part of the outline of the duct inlet, at a substantially constant separation when viewed along the duct.

10. A duct according to any preceding claim, comprising a liner defining an inner path for exhaust gases within an outer path for bypass air.
